# EUROPEAN PATENT SPECIFICATION

(11) **EP 0 816 463 B1**
(45) Date of publication and mention of the grant of the patent: **29.03.2000**
(21) Application number: 97304376.3
(22) Date of filing: 23.06.1997
(51) Int. Cl.: C09J 183/04, C09J 183/10, C08G 77/44

(54) **Method of making silicone pressure sensitive adhesive compositions**
Verfahren zur Herstellung von druckempfindlichen Klebemitteln aus Silikon
Procédé de préparation d'adhésifs sensibles à la pression à base de silicones

(30) Priority: 05.07.1996 US 684844
(43) Date of publication of application: 07.01.1998
(73) Proprietor: DOW CORNING CORPORATION, Midland, Michigan 48686-0995 (US)
(72) Inventor: Cifuentes, Martin Eric, Midland, Michigan 48640 (US); Fenton, William Neal, Midland, Michigan 48640 (US); Bianxiao, Zhong, Midland, Michigan 48640 (US)
(74) Representative: Kyle, Diana

(56) References cited:
- GB-A- 998 232
- US-A- 3 929 704
- US-A- 4 831 070

## Description

The present invention provides a method of preparing silicone pressure sensitive adhesive compositions comprising heating a mixture of a polydiorganosiloxane, a silicone resin copolymer and an equilibration catalyst, and then by adding an organic peroxide or azo compound to the resultant reaction product.

Silicone pressure sensitive adhesive compositions (SPSA) are typically produced by either blending or condensing together a silicone resin and a silicone polymer. General representations of this prior art are: US-As 2,736,721; 2,814,601; 2,857,356; 3,528,940; 3,929,704; 4,831,070; 4,865,920; 5,100,976; 5,248,739 and EP-A 0,459,292.

US-A 4,831,070 discloses a composition for forming elastomeric SPSA compositions comprising a mixture of a resin copolymer containing triorganosiloxy units and SiO_{4/2} units, a polydiorganosiloxane endcapped with silicon-bonded hydroxy groups and having a viscosity of from 50 to 300,000 mPa·s (centipoise) at 25°C., an organosilicon compound containing an average of more than two silicon-bonded alkoxy groups per molecule and a condensation catalyst such as metal salts of carboxylic acids.

However, nowhere does this prior art disclose a method of making SPSA compositions whereby a mixture of a polydiorganosiloxane, a silicone resin copolymer and an equilibration catalyst are first heated to form a reaction product, and by then adding an organic peroxide or azo compound to said reaction product.

The present invention surprisingly provides a SPSA composition that exhibits high tack while retaining good peel adhesion and cohesive strength in a peroxide cured system. It is easily produced by equilibrating a polydiorganosiloxane in the presence of a silicone resin copolymer. It also has a high solids content that maintains excellent adhesive properties at low viscosities.

Our invention is a method of making a SPSA composition comprising the-steps of (I) heating a mixture comprising (A)(i) a hydroxyl-terminated polydiorganosiloxane having a viscosity of from 100 to 10,000,000 mm²/s at 25°C. or (A)(ii) a mixture of (a) a hydroxyl-terminated polydiorganosiloxane and (b) a polydiorganosiloxane selected from (i) polydiorganosiloxanes terminated with monovalent hydrocarbon radicals free of aliphatic unsaturation or (ii) alkenyl-terminated polydiorganosiloxanes, wherein said mixture also has a viscosity of from 100 to 10,000,000 mm²/s at 25°C., (B) a silicone resin which can be dispersed in either a hydrocarbon liquid or a silicone liquid and which comprising R₃SiO_{1/2} siloxane units and SiO_{4/2} units having a number average molecular weight of 3000 to 7500, wherein R is selected from a monovalent hydrocarbon or halohydrocarbon radical having from 1 to 20 carbon atoms and is free of aliphatic unsaturation, an alkenyl radical or a hydroxyl radical, and (C) an equilibration catalyst selected from alkali metal oxides, alkali metal alkoxides, alkali metal hydroxides, alkali metal silanolates, alkali metal siloxanolates, alkali metal amides or metal alkyls to form a reaction product having a solids content of at least 80% and a viscosity of up to 200,000 mPa·s (centipose); and (II) adding (D) an organic peroxide or azo compound to the reaction product of (I).

The hydroxyl-terminated polydiorganosiloxane of component (A)(i) or A(ii) is preferably a polydiorganosiloxane having the general formula HOR¹₂SiO(R¹₂SiO)ₐSiR¹₂OH wherein each R¹ is independently selected from a monovalent hydrocarbon or halohydrocarbon radical having from 1 to 20 carbon atoms or an alkenyl radical. The monovalent hydrocarbon radicals free of aliphatic unsaturation include alkyl radicals such as methyl, ethyl, propyl, pentyl, octyl, undecyl or octadecyl; cycloaliphatic radicals such as cyclohexyl; aryl radicals such as phenyl, tolyl, xylyl, benzyl or 2-phenylethyl and chlorinated hydrocarbon radicals such as 3-chloropropyl or dichlorophenyl. The alkenyl radicals of R¹ include vinyl, allyl, butenyl, hexenyl, cyclohexenyl and beta-cyclohexenylethyl. Preferably, R¹ is selected from methyl, phenyl or vinyl. Preferably, the hydroxyl-terminated polydiorganosiloxane of component (A)(i) or (ii) is a compound in which at least 50%, and preferably at least 85%, of the R¹ radicals are methyl radicals.

The average value of "a" in the formula above is such that it provides a viscosity at 25°C. of 100 to 10,000,000 mm²/s (centistokes), the viscosity being a function of the R¹ radicals on this polymer. It is especially preferred that the average value of "a" is such that it provides a component (A) of a viscosity from 100 to 1,000,000 mm²/s at 25°C., and it is highly preferred that this "a" value provide a viscosity within the range from 1,000 to 500,000 mm²/s at 25°C.

Specific examples of these polydiorganosiloxanes (A)(i) or (A)(ii) are HOMe₂SiO(Me₂SiO)ₐSiMe₂OH, HOMe₂SiO(Me₂SiO)_{0.94a}(Ph₂SiO)_{0.06a}SiMe₂OH, HOPh₂SiO(Me₂SiO)_{0.94a}(Ph₂SiO)_{0.06a}SiPh₂OH, HOMe₂SiO(Me₂SiO)_{0.95a}(MeViSiO)_{0.05a}SiMe₂OH, HOVi₂SiO(Me₂SiO)_{0.95a}(MeViSiO)_{0.05a}SiVi₂OH or HOR₂SiO(Me₂SiO)_{0.88a}(Ph₂SiO)_{0.12a}SiR₂OH wherein R and "a" are as defined above.

Component (A)(i) or (A)(ii) is also a mixture of a hydroxyl-terminated polydiorganosiloxane and a polydiorganosiloxane, selected from polydiorganosiloxanes terminated with monovalent hydrocarbon radicals free of aliphatic unsaturation or alkenyl-terminated polydiorganosiloxanes wherein said mixture also has a viscosity of from 100 to 10,000,000 mm²/s at 25°C. The above hydroxyl-terminated polydiorganosiloxane is the same as described above, including preferred embodiments thereof. The monovalent hydrocarbon radicals free of aliphatic unsaturation and the alkenyl radicals are also as described above, including preferred embodiments thereof.

Specific examples of polydiorganosiloxanes terminated with monovalent hydrocarbon radicals free of aliphatic unsaturation include Me₃SiO(Me₂SiO)ₐSiMe₃, Me₃SiO(Me₂SiO)_{0.95a}(MeVisiO)_{0.05a}SiMe₃ or Me₃SiO(Me₂SiO)_{0.5a}(MePhSiO)_{0.5a}SiMe₃ wherein Me, Vi and Ph denote and hereafter represent methyl, vinyl and phenyl, respectively. Again, "a" has an average value as defined above.

Specific examples of polydiorganosiloxanes terminated with alkenyl radicals are ViMe₂SiO(Me₂SiO)ₐSiMe₂vi, ViMe₂SiO(Me₂SiO)_{0.95a}(MePhSiO)_{0.05a}SiMe₂Vi, ViMe₂SiO(Me₂SiO)_{0.98a}(MeViSiO)_{0.02a}SiMe₂Vi, PhMeViSiO(Me₂SiO)ₐSiPhMeVi or PhMeViSiO(Me₂SiO)_{0.8a}(MePhsiO)_{0.1a}(Ph₂SiO)_{0.1a}SiPhMeVi, wherein "a" is as defined above.

In component (A)(i) or (A)(ii), it is also preferred that the sum of phenyl and vinyl radicals not exceed 30% of the silicon atoms. In addition, component (A)(i) or (A)(ii) can comprise trace amounts of siloxane branching sites, such as R²SiO_{3/2} units and SiO_{4/2} units, provided that this component remains flowable. Component (A) is well known in the art and is prepared by known methods.

The amount of component (A)(i) or (A)(ii) in our compositions is preferably from 30 to 50 parts by weight, and more preferably from 38 to 47 parts by weight, per 100 parts by weight of components (A) and (B).

Component (B) of our claimed invention is a "soluble" silicone resin comprising R₃SiO_{1/2} siloxane units (M units) and SiO_{4/2} siloxane units (Q units), wherein R is selected from a monovalent hydrocarbon or halohydrocarbon radical having 1 to 20 carbon atoms and free of aliphatic unsaturation, an alkenyl radical or a hydroxyl radical, all of which are as defined above. By the term "soluble", it is meant that the silicone resin (B) can be dispersed in either a hydrocarbon liquid such as benzene, toluene, xylene and heptane; or in a silicone liquid such as cyclic or linear polydiorganosiloxanes. Preferably this resin is also soluble in c ponent (A) above. Preferably, component (B) is a "soluble" hydroxy-functional organopolysiloxane resin consisting of M units and Q units. In this resin, the R₃SiO_{1/2} siloxane units are bonded to the SiO_{4/2} units each of which is bonded to at least one other SiO_{4/2} unit. Some of the SiO_{4/2} units are bonded to hydroxy radicals, resulting in HOSiO_{3/2} units, thereby accounting for the silicon-bonded hydroxyl content of the resin. In addition, the resin may contain a small amount of a low molecular weight material comprised substantially of a neopentamer organopolysiloxane having the formula (R³₃SiO)₄Si.

It is preferable that the hydroxy content of this silicone resin, as determined by ²⁹Si NMR (nuclear magnetic resonance) ranges from 1.0 to 5.0 wt%, and preferably 1.5 to 3.5 wt%, based on the resin solids content. Although resins having less than 1.0 wt% hydroxy can be used in the instant invention, such resins are less favored because the triorganosilyl groups have to be cleaved and because of the hydroxy content introduced during the reaction.

In component (B), R is as defined above, including preferred embodiments thereof. Preferably, R is selected from methyl, phenyl, vinyl or hydroxyl. More preferably, at least one-third, and most preferably nearly all of the R radicals in component (B) are methyl radicals. Examples of preferred R₃SiO_{1/2} siloxane units include Me₃SiO_{1/2}, ViMe₂SiO_{1/2}, PhMe₂SiO_{1/2} and Ph₂MeSiO_{1/2}.

It is preferred that the molar ratio of R₃SiO_{1/2} siloxane units (M) to SiO_{4/2} units (O) is from 0.6 to 1.2. It is more preferred that this ratio be between 0.6 and 1.0. The above M/Q mole ratios are easily obtained by ²⁹Si NMR. Component (B) has a number average molecular weight (Mn) of 3,000 to 7,500 when measured by gel permeation chromatography (GPC) against a polydimethylsiloxane standard. It is preferred that Mn is from 3,500 to 6,000.

Component (B) is prepared by well known methods, such as the silica hydrosol capping process of US-A 2,676,182, as modified by US-As 3,627,851 and 3,772,247. Further, component (B) can also be prepared by the cohydrolysis of a trialkyl hydrolyzable silane and alkyl silicate as in US-A 2,857,356.

The amount of component (B) in the method of this invention is from 50 to 70 parts by weight, and more preferably from 53 to 62 parts by weight, per 100 parts by weight of components (A) and (B).

Component (C) of our invention is an equilibration catalyst selected from alkali metal oxides, alkali metal alkoxides, alkali metal hydroxides, alkali metal silanolates, alkali metal siloxanolates, alkali metal amides or metal alkyls. Suitable alkali metal oxides are exemplified by sodium oxide; alkali metal alkoxides by potassium ethoxide, sodium methoxide, lithium methoxide and potassium isopropoxide; alkali metal hydroxides by potassium hydroxide, lithium hydroxide, sodium hydroxide, cesium hydroxide, tetramethyl ammonium hydroxide and tetrabutyl phosphonium hydroxide; alkali metal silanolates by potassium silanolate, lithium silanolate and sodium silanolate; alkali metal siloxanolates by potassium siloxanolate, lithium siloxanolate and sodium siloxanolate; alkali metal amides by sodium amide or potassium amide; and metal alkyls by butyllithium.

The amount of component (C) in our claimed method is from 10 to 500 parts per million (ppm), and preferably from 20 to 200 ppm, based on the total weight of components (A) and (B).

The reaction product of step (I) is made by heating a mixture of components (A), (B) and (C) at a temperature of above 100°C. The mixing of these components is enhanced, if desired, by the use of one or more solvents in the mixture of step (I), such as benzene, toluene, xylene, naphtha and mineral spirits or alcohols such as methanol, ethanol, isopropanol, butanol and n-propanol. The amount of solvent, if used, ranges from 10 to 80 parts by weight, per 100 parts by weight of components (A) and (B). The solvent is thereafter removed, if desired, during the heating of the mixture. The mixture of (A)-(C) is generally heated for up to 4 hours at temperatures of from 150 to 180°C. However, this time and temperature are usually dependent on the selection and concentration of all reaction components.

When a solvent is used, it may be desirable to later strip the solvent from the reaction product. Methods of stripping volatile components are well known in the art and need no extensive delineation herein. Any method of removing volatile components can be used, such as molecular stills, rotoevaporators and wipe film evaporators, with the preferred method being roto-evaporators.

The mixture of step (I) can also further comprise a rare earth metal salt of a fatty acid. Examples of rare earth metals suitable for forming this salt include cerium, lanthanum and praseodymium, with cerium being preferred. The fatty acid generally contains 6 to 18 carbon atoms, most preferably 8 carbon atoms. The preferred salt is cerium octoate. These salts are generally used herein to provide our composition with an amount of rare earth metal from 1 to 1000 parts by weight, and preferably from 10 to 250 parts by weight, per one million parts by weight of components (A) and (B). Typically, the rare earth metal salt, if used, is in the form of a 30 wt% solution, 6 wt% of which is composed of the rare earth metal. Solvents suitable for our rare earth metal solution include hexane, heptane, toluene, xylene, naphtha, mineral spirits and ketones.

The reaction product of step (I) must have a solids content of at least 80 wt% and a viscosity of up to 200,000 mPa·s. It is preferred that it has a viscosity of up to 150,000 mPa·s; and it is more preferred that it has a viscosity of up to 100,000 mPa·s.

In step (II), component (D) (an organic peroxide or azo compound) is added to the reaction product of step (I). Examples of organic peroxides which are suitable as component (D) are diacyl peroxides such as benzoyl peroxide or dichlorobenzoyl peroxide. Benzoyl peroxide has been found herein to be a particularly effective organic peroxide.

Examples of azo compounds suitable as component (D) include azobenzene, azobenzene-p-sulfonic acid, azobisdimethylvaleronitrile, azobisisobutyronitrile or azodine, with azobisisobutyronitrile being preferred. Component (D), when added to the product of step (I), can be added as a solution, for example, in an appropriate solvent such as benzene, toluene, xylene, naphtha, chlorocarbons or mineral spirits.

The amount of Component (D) in our method is from 0.1 to 5 parts by weight, and preferably from 1.5 to 3.5 parts by weight, per 100 parts by weight of components (A) and (B).

During or after the formation of our SPSA composition, small amounts of additional ingredients may be added thereto so long as they do not materially affect the desired properties of the claimed composition. These additional ingredients are exemplified by antioxidants, pigments, stabilizers, fillers and the like commonly added to SPSA compositions. It should also be apparent to one skilled in the art that a blend of two reaction products, each having different amounts of components (A), (B) and/or (C), can be initially formed in Step (I) and then this blend can be catalyzed according to Step (II).

The SPSA compositions prepared by the method of this invention are useful as pressure sensitive adhesives (PSAs) and readily stick to a solid support, whether flexible or rigid. These compositions may be applied to a surface by any suitable means such as rolling, spreading, dipping and spraying and thereafter cured as described above.

The surface of the support, and the substrate to which the support is adhered, may be any known solid material such as metals, like aluminum, silver, copper, iron and their alloys; porous materials such as paper, wood, leather and fabrics; organic polymeric materials such as polyolefins including polyethylene or polypropylene; fluorocarbon polymers such as polytetrafluoroethylene or polyvinylfluoride; silicone elastomers; silicone resins; polystyrene; polyamides such as nylon, polyimides, polyesters and acrylic polymers; painted surfaces, siliceous materials such as concrete, bricks and cinderblocks; or glass such as glass cloth. Porous materials such as glass cloth are often impregnated with a substance that will prevent the migration of a SPSA composition from one surface to another surface of the support. In this regard, it is also well known to chemically or physically treat (for example etching, etc.) or to primecoat (adding a curable polysiloxane) the surface of a substrate prior to application of SPSA compositions to enhance their adhesion. The SPSA compositions of the invention are particularly suited to applications wherein good adhesion to a low energy surface (e.g., polyethylene or Teflon^{TM}) is desired.

The amount of our SPSA composition to be applied to surfaces is that sufficient to render the surface tacky to the touch after removal of any solvent. After application, the adhesive is cured by air drying or heating at temperatures of up to 300°C.

Solid supports bearing the cured compositions of this invention are readily adhered to any solid substrate because our claimed compositions of this method have high tack and good adhesive strength.

Useful articles which are thus prepared include pressure sensitive tapes, labels, emblems and other decorative or informational signs. In particular, these compositions are useful in tapes such as a splicing tape in label and paper stock manufacture or converting. An especially useful article herein is one comprising a flexible or rigid support that withstands extreme temperatures, hot and/or cold and carrying on at least one surface thereof our SPSA compositions. Such an article makes full use of the stability at high temperatures, and the flexibility at low temperatures, that our compositions have and achieve.

All parts and percentages in the following are on a weight basis and all measurements were obtained at 25°C. unless otherwise indicated. The molecular weight properties of the polydimethylsiloxane polymers below were determined by Gas Phase Chromatography (GPC) in a toluene solvent and using a polydimethylsiloxane standard.

The apparatus and testing procedures used herein are as follows:

Adhesion was measured by applying a 15.2 x 2.5 cm (6 x 1 inch) strip of a Kapton^{TM} or Mylar^{TM} backed adhesive to a clean 5 x 15.2 cm (2 x 6 inch) stainless steel, polyethylene (PE) or Teflon^{TM} panel using two passes of a 2 kg (4.5 lb) rubber-coated roller. The force required to remove the tape from the panel was measured with a Keil™ Tester at an peel angle of 180° at a rate of 30.5 cm (12 inches) per minute. The values recorded are the average of multiple readings taken during the course of one pull per sample. This tester is more fully described in TAPPI, Vol. 43, No. 8., pages 164A and 165A (August 1960). The readings are reported in units of g/cm (ounces per inch).

Tack was measured on five 2.5 cm (one-inch) squares of the Kapton^{TM} or Mylar^{TM} backed adhesive using a POLYKEN^{(R)} probe tack tester, available from Testing Machines, Inc., Amityville, NY. The tack tester has a 0.5 cm diameter stainless steel probe. The test procedure used a 20 gram weight, a dwell time of 1.0 second and a pull speed of 0.5 cm per second. The results reported represent the average of at least five readings, expressed in grams.

The cohesive strength of the compositions was measured by devolatilizing non-catalyzed, 2 gram samples of the adhesive compositions at 150°C. for one hour in an aluminum foil container and by then physically tearing the container and the cured film apart. The container halves were thereafter pulled apart. If the film stretched across the torn cup, with rubber-like elongation, the cohesive strength was recorded as "Pass". If the film tore along with the cup and exhibited very little elongation, the result was recorded as "Fail".

The high temperature hold was measured by preparing triplicate samples with the following procedure: To begin, 2.5 cm (one inch) wide strips of 0.05 mm (2 mil) pressure sensitive adhesive (PSA) films, supported on a 0.025 mm (1 mil) Kapton(R) backing, were applied to a clean, polished, stainless steel panel, in such a way as to provide a 6.5 square centimeter (1 square inch) area of contact between the adhesive tape and the substrate. Contact was maximized by making two passes across the bonded area using a 2 kg (4.5 lb) roller. The steel panel and attached adhesive tape were then vertically mounted and a 1000 gram weight was attached to the bottom of the adhesive strip. The mounted samples were then placed in a 204.4°C. (400°F.) oven and allowed to remain there for a period of five days or until at least two out of the three samples had detached from the steel panel.

Non-volatile content, i.e. percent solids, of an adhesive composition was determined by heating a two gram sample of the material at 150°C. for one hour and expressing the weight of the residue as a percentage of the original sample weight.

The non-volatile content of the MQ resins was determined by mixing 1.5 grams of resin solution with 0.75 gram of a polydimethylsiloxane fluid having a viscosity of 100 mm²/s {centistokes (cS)}, followed by devolatilization at 150°C. for 2 hours.

Molecular weights of the soluble silicone resins were measured by gel-permeation chromatography (GPC) using a Varian™ TSK 4000 + 2500 columns at 35°C. in a toluene mobile phase at 1 ml/min. Polydimethylsiloxane (PDMS) standards were used for linear regression calibrations. A refractive index detector was used in the GPC measurements employing the PDMS standard calibration.

The resins in the examples were analyzed using ²⁹Si NMR to determine the molar ratios of the (CH₃)₃SiO_{1/2} units (M) to SiO_{4/2} units (Q) in each resin and to determine the hydroxyl content of each resin.

Viscosities were measured in mPa·s {centipoise (cP)} at room temperature (25°C.) using a Brookfield™ rotating disc viscometer fitted with an LV-4 spindle. The following materials were employed in preparing the compositions of the examples:

POLYMER A was a hydroxyl-endblocked polydimethylsiloxane fluid having a viscosity of 330,000 mPa·s, a number average molecular weight (Mn) of 90,310 and a weight average molecular weight (Mw) of 174,700.

POLYMER B was a hydroxyl-endblocked polydimethylsiloxane fluid having a viscosity of 55,000 mPa·s, an Mn of 52,910 and an Mw of 101,200.

POLYMER C was a hydroxyl-endblocked polydimethylsiloxane fluid having a viscosity of 15,000 mPa·s, an Mn of 38,200 and an Mw of 68,470.

POLYMER D was a hydroxyl-endblocked polydimethylsiloxane gum copolymer containing 4 mole% of MeViSiO repeat units and having a plasticity of 1.5 mm (59 mils) as measured by ASTM D926-27.

RESIN A was a benzene-soluble, siloxane resin consisting of (CH₃)₃SiO_{1/2} (M) units and SiO_{4/2} (Q) units and having an M/Q ratio of 0.78/1.0, a hydroxyl content of 2.9 wt% and the following molecular weight characteristics as determined by GPC in chloroform, using fractionated MQ resin standards and an IR detector, an Mn of 4,300, an Mw of 14,600 and an Mw/Mn of 3.395.

THERMAL STABILITY ADDITIVE was Ten-Cem™ (a dispersion of a neodecanoate salt of a rare earth metal in mineral spirits having 6% active metals in mineral spirits available from Mooney Chemicals, Inc., Cleveland, Ohio).

PEROXIDES employed were:

Perkadox(R) PD-50S-ps-a: a 50 wt% 2,4-dichlorobenzoyl peroxide supplied in a proprietary polysiloxane fluid by Akzo Chemical.

Benzoyl peroxide, in granular form and 98% pure, was supplied by Aldrich Chemical Company.

POTASSIUM SILANOLATE SOLUTION: a 10 wt% solids solution of potassium silanolate in toluene.

### COMPARATIVE EXAMPLE 1

148.8 grams (g) of Resin A, 74.2 g of Polymer A, 77.0 g of toluene and 0.06 g of a thermal stability additive were combined and thoroughly blended in a 500 milliliter (ml), three-necked flask equipped with a stirrer, thermometer, condenser and Dean Stark Trap. This mixture was then heated to reflux and maintained at reflux for 2 hours (hrs). The resultant product was stripped at atmospheric pressure to a desired non-volatiles content of 75% solids. The viscosity of the resultant SPSA composition was determined to be 4,000 mPa·s.

The resultant composition was tested for cohesive strength as described above and failed. Thus, the cohesive strength of the composition was poor.

### COMPARATIVE EXAMPLE 2

148.8 g of Resin A, 74.2 g of Polymer A, 77.0 g of toluene and 0.06 g of a thermal stability additive were combined and thoroughly blended in a 500 ml, three-necked flask equipped with a stirrer, thermometer, condenser and Dean Stark Trap. This mixture was then heated to reflux and maintained at reflux for 2 hours. The resultant blend was stripped at atmospheric pressure to a non-volatile content of 75% solids. The viscosity of the resultant PSA was determined to be 4,600 mPa·s.

The resultant composition was tested for cohesive strength as described above and failed. Thus, the cohesive strength of said composition was poor.

### EXAMPLE 1

146.3 g of Resin A, 76.8 g of Polymer B, 77.0 g of toluene, 0.06 g of a thermal stability additive and 2.7 g of a potassium silanolate solution were combined and thoroughly blended in a three-necked flask equipped with a stirrer, thermometer, condenser and Dean Stark Trap. The mixture was next heated to reflux and maintained at reflux for 4 hours. Water was continuously removed during the reflux step. The resultant product was then stripped at atmospheric pressure to a non-volatiles content of 85% solids. The resultant high solids product was recovered and stored for later use. The viscosity of the final product was determined to be 33,750 mPa·s.

### EXAMPLE 2

146.3 g of Resin B, 76.8 g of Polymer B, 77 g of toluene, 0.06 g of a thermal stability additive and 5.4 g of a potassium silanolate solution were combined and thoroughly blended in a three-necked flask equipped with a stirrer, thermometer, condenser and Dean Stark Trap. The mixture was next heated to reflux and maintained at reflux for 4 hours. Water was continuously removed during the reflux step. The resultant mixture was then neutralized with 0.99 g of a blend of phosphoric acid and silicone fluids and thereafter stripped at atmospheric pressure to a non-volatiles content of 85% solids. The resultant product was then recovered and measured to have a viscosity of 11,300 mPa·s.

### EXAMPLE 3

146.3 g of Resin A, 76.4 g of Polymer C, 77.4 g of toluene, 0.06 g of a thermal stability additive and 0.72 g of 0.05N KOH in ethanol were combined and thoroughly blended in a 500 ml, three-necked flask equipped with a stirrer, thermometer, condenser and Dean Stark Trap. The mixture was heated to reflux and maintained at reflux for 4 hourrs. Water was continuously removed during the reflux step. The resultant product was then stripped at atmospheric pressure to a non-volatiles content of 85% solids. The viscosity of this product was determined to be 3,500 mPa·s.

### EXAMPLE 4

146.3 g of Resin A, 76.4 g of Polymer C, 77.4 g of toluene, 0.06 g of a thermal stability additive and 1.44 g of 0.05N KOH in ethanol were combined and thoroughly blended in a 500 ml, three-necked flask equipped with a stirrer, thermometer, condenser and Dean Stark Trap. The mixture was heated to reflux and maintained at reflux for 4 hours. Water was continuously removed during the reflux step. The resultant product was then stripped at atmospheric pressure to a non-volatiles content of 85% solids. The viscosity of this product was 13,400 mPa·s.

### EXAMPLE 5

146.3 g of Resin A, 76.4 g of Polymer C, 77.4 g of toluene, 0.06 g of a thermal stability additive and 2.88 g of 0.05N KOH in ethanol were combined and thoroughly blended in a three-necked flack equipped with a stirrer, thermometer, condenser and Dean Stark Trap. The mixture was heated to reflux and maintained at reflux for 4 hours. Water was continuously removed during the reflux step. The resultant product was then stripped at atmospheric pressure to a non-volatiles content of 85% solids. The viscosity of this product was determined to be 15,200 mPa·s.

### EXAMPLE 6

Portions of the SPSA compositions of Examples 1-5 were catalyzed with benzoyl peroxide at a 2% level of peroxide solids based on the solids content of said compositions. The peroxide was incorporated into the composition as a 10% solution in toluene. The product solution was then cast onto 0.025 mm (1 mil) Kapton(R) film at a thickness sufficient to yield a 0.05 mm (2 mil) cured film. The cast films were devolatilized for 2 minutes at 70°C. and then cured for 2 additional minutes at 204°C. The resultant sheets supporting our SPSA coatings were then cut into 2.5 cm (1 inch) wide strips and tested for peel adhesion and probe tack as described above. Results are provided in Table 1.

**Table 1**

| PSA SAMPLE | 180° PEEL ADHESION | PROBE TACK |
|---|---|---|
| Ex. 1 | 0.29 kg/cm (26 oz/in) | 837 g/cm² |
| Ex. 2 | 0.28 kg/cm (25 oz/in) | 755 g/cm² |
| Ex. 3 | 0.30 kg/cm (27 oz/in) | 887 g/cm² |
| Ex. 4 | 0.27 kg/cm (24 oz/in) | 855 g/cm² |
| Ex. 5 | 0.29 kg/cm (26 oz/in) | 887 g/cm² |

### EXAMPLE 7

146.3 g of Resin A, 70.3 g of Polymer C, 6.6 g of Polymer D, 77.4 g of toluene, 0.06 g of a thermal stability additive and 1.44 g of 0.05N KOH in ethanol were combined and thoroughly blended in a 500 ml three-necked flask equipped with a stirrer, thermometer, condenser and Dean Stark Trap. The mixture was heated to reflux and maintained at reflux for 4 hours. Water was continuously removed during the reflux step. The resultant product was then stripped at atmospheric pressure to a non-volatiles content of 85% solids. The viscosity of the product was 20,000 mPa·s.

A portion of the SPSA sample described above was catalyzed with benzoyl peroxide at a 2% level of peroxide solids, based on solids content in the composition. The peroxide was incorporated into the composition as a 10% solution in toluene. The adhesive solution was then cast onto 0.025 mm (1 mil) Kapton(R) film at a thickness sufficient to yield a 0.05 mm (2 mil) cured film. The cast film was devolatilized for 2 minutes at 70°C. and then cured for 2 additional minutes at 204°C. The resultant laminated sheet was then cut into 2.5 cm (1 inch) wide strips and tested for peel adhesion and probe tack. The peel adhesion of the film was 0.27 kg/cm (24 oz/in) and the probe tack was 735 g/cm².

## Claims

1. A method of making a silicone pressure sensitive adhesive composition comprising the steps of:
(I) heating a mixture comprising:
(A)(i) a hydroxyl-terminated polydiorganosiloxane having a viscosity of from 100 to 10,000,000 mm²/s at 25°C., or
(A)(ii) a mixture of (a) a hydroxyl-terminated polydiorganosiloxane and (b) a polydiorganosiloxane selected from (i) polydiorganosiloxanes terminated with monovalent hydrocarbon radicals free of aliphatic unsaturation or (ii) alkenyl-terminated polydiorganosiloxanes, wherein said mixture also has a viscosity of from 100 to 10,000,000 mm²/s at 25°C.;
(B) a silicone resin which can be dispersed in either a hydrocarbon liquid or a silicone liquid and which comprises R₃SiO_{1/2} siloxane units and SiO_{4/2} units having a number average molecular weight of 3000 to 7500, wherein R is selected from a monovalent hydrocarbon or halohydrocarbon radical having from to 20 carbon atoms, an alkenyl radical or a hydroxyl radical; and
(C) an equilibration catalyst selected from alkali metal oxides, alkali metal alkoxides, alkali metal hydroxides, alkali metal silanolates, alkali metal siloxanolates, alkali metal amides or metals alkyls to form a reaction product having a solids content of at least 80% and a viscosity of up to 200,000 mPa·s; and
(II) adding (D) an organic peroxide or azo compound to the reaction product of (I).

2. A method according to claim 1 wherein the mixture of step (I) further comprises a solvent.

3. A method according to claims 1 or 2 wherein the mixture of step (I) further comprises a rare earth metal salt of a fatty acid.

4. A method according to any of claims 1-3 wherein the composition is further prepared by stripping the reaction product of step (I) prior to step (II).

5. A method according to any of claims 1 to 4, wherein the hydroxyl-terminated polydiorganosiloxane is a polydiorganosiloxane having the general formula HOR¹₂SiO(R¹₂SiO)ₐSiR¹₂OH wherein each R¹ is independently selected from a monovalent hydrocarbon or halohydrocarbon radical having from 1 to 20 carbon atoms or an alkenyl radical and "a" has a value such that the viscosity of said polydiorganosiloxane ranges from 1,000 to 500,000 mm²/s when measured at 25°C.

6. A method according to any of claims 1 to 5, wherein (B) has a number average molecular weight of 3,500 to 6,000.

7. A method according to any of claims 1 to 6, wherein the molecular ratio of R₃SiO_{½} siloxane units to SiO_{4/2} units is from 0.6 to 1.2.

8. A method according to claim 7 wherein the ratio is from 0.6 to 1.0.

9. A method according to any of claims 1 to 8 wherein component (C) is present in an amount of 10 to 500 ppm based on the total weight of components (A) and (B).

10. A method according to 9 wherein the amount is 20 to 200 ppm based on the total weight of components (A) and (B).

## Patentansprüche

1. Verfahren zur Herstellung einer Haftklebstoffzusammensetzung auf Siliconbasis, das die Schritte umfaßt:
(I) Erwärmen einer Mischung, enthaltend:
(A)(i) ein Polydiorganosiloxan mit endständigen Hydroxylgruppen und einer Viskosität bei 25°C von 100 bis 10.000.000 mm²/s oder
(A)(ii) eine Mischung von (a) einem Polydiorganosiloxan mit endständigen Hydroxylgruppen und (b) einem Polydiorganosiloxan, ausgewählt aus (i) Polydiorganosiloxanen mit endständigen einbindigen Kohlenwasserstoffresten, die frei von aliphatischen Ungesättigtheiten sind, oder (ii) Polydiorganosiloxanen mit endständigen Alkenylgruppen, wobei diese Mischung eine Viskosität bei 25°C von 100 bis 10.000.000 mm²/s aufweist,
(B) ein Siliconharz, das in entweder einer Kohlenwasserstoffflüssigkeit oder einer Siliconflüssigkeit dispergiert werden kann und das R₃SiO_{1/2}-Siloxaneinheiten und SiO_{4/2}-Einheiten aufweist mit einem zahlenmittleren Molekulargewicht von 3.000 bis 7.500, wobei R ausgewählt ist aus einbindigen Kohlenwasserstoff- oder Halogenkohlenwasserstoffresten mit 1 bis 20 Kohlenstoffatomen, einem Alkenylrest oder einem Hydroxylrest, und
(C) einen gleichgewichtseinstellenden Katalysator, ausgewählt aus Alkalimetalloxiden, Alkalimetallalkoxiden, Alkalimetallhydroxiden, Alkalimetallsilanolaten, Alkalimetallsiloxanolaten, Alkalimetallamiden oder Metallalkylen, um ein Reaktionsprodukt mit einem Feststoffgehalt von wenigstens 80% und einer Viskosität von bis zu 200.000 mPa·s zu bilden, und
(II) Zugeben von (D) einer organischen Peroxid- oder Azoverbindung zu dem Reaktionsprodukt aus (I).

2. Verfahren nach Anspruch 1, wobei die Mischung aus Schritt (I) weiterhin ein Lösungsmittel enthält.

3. Verfahren nach den Ansprüchen 1 oder 2, wobei die Mischung aus Schritt (I) weiterhin ein Seltenerdmetallsalz oder eine Fettsäure enthält.

4. Verfahren nach einem der Ansprüche 1 bis 3, wobei die Zusammensetzung weiterhin durch Strippen des Reaktionsprodukts aus Schritt (I) vor Schritt (II) hergestellt wird.

5. Verfahren nach einem der Ansprüche 1 bis 4, wobei das Polydiorganosiloxan mit endständigen Hydroxylgruppen ein Polydiorganosiloxan mit der allgemeinen Formel HOR¹₂SiO(R¹₂SiO)ₐSiR¹₂OH ist, worin jedes R¹ unabhängig voneinander ausgewählt ist aus einbindigen Kohlenwasserstoff- oder Halogenkohlenwasserstoffresten mit 1 bis 20 Kohlenstoffatomen oder einem Alkenylrest und "a" einen solchen Wert aufweist, daß die Viskosität dieses Polydiorganosiloxans im Bereich von 1.000 bis 500.000 mm²/s liegt, wenn sie bei 25°C gemessen wird.

6. Verfahren nach einem der Ansprüche 1 bis 5, worin (B) ein zahlenmittleres Molekulargewicht von 3.500 bis 6.000 aufweist.

7. Verfahren nach einem der Ansprüche 1 bis 6, wobei das molekulare Verhältnis von R₃SiO_{1/2}-Siloxaneinheiten zu SiO_{4/2}-Einheiten 0,6 bis 1,2 beträgt.

8. Verfahren nach Anspruch 7, wobei das Verhältnis 0,6 bis 1,0 beträgt.

9. Verfahren nach einem der Ansprüche 1 bis 8, worin Komponente (C) in einer Menge von 10 bis 500 ppm, bezogen auf das Gesamtgewicht der Komponenten (A) und (B), vorhanden ist.

10. Verfahren nach Anspruch 9, worin die Menge 20 bis 200 ppm, bezogen auf das Gesamtgewicht der Komponenten (A) und (B), beträgt.

## Revendications

1. Un procédé de préparation d'une composition d'adhésif de silicone sensible à la pression, comprenant les étapes suivantes :
(I) chauffer un mélange comprenant :
(A)(i) un polydiorganosiloxane terminé par des groupes hydroxyle ayant une viscosité de 100 à 10 000 000 mm²/s à 25°C, ou
(A) (ii) un mélange de (a) un polydiorganosiloxane terminé par des groupes hydroxyle et (b) un polydiorganosiloxane choisi parmi (i) les polydiorganosiloxanes terminés par des radicaux hydrocarbonés monovalents exempts d'insaturation aliphatique ou (ii) les polydiorganosiloxanes terminés par des groupes alcényles, ledit mélange ayant également une viscosité de 100 à 10 000 000 mm²/s à 25°C ;
(B) une résine de silicone qui peut être dispersée dans un hydrocarbure liquide ou dans une silicone liquide et qui comprend des motifs siloxanes R₃SiO_{1/2} et des motifs SiO_{4/2}, ayant un poids moléculaire moyen en nombre de 3000 à 7500, où R est choisi parmi un radical hydrocarboné ou halogénohydrocarboné monovalent ayant 1 à 20 atomes de carbone, un groupe alcényle ou un groupe hydroxyle ; et
(C) un catalyseur d'équilibrage choisi parmi les oxydes de métaux alcalins, les alcoolates de métaux alcalins, les hydroxydes de métaux alcalins, les silanolates de métaux alcalins, les siloxanolates de métaux alcalins, les amidures de métaux alcalins ou les alkylmétaux, pour former un produit réactionnel ayant une teneur en matière sèche d'au moins 80 % et une viscosité d'au plus 200 000 mPa.s ; et
(II) ajouter (D) un peroxyde organique ou un composé azoïque au produit réactionnel de (I).

2. Un procédé selon la revendication 1, dans lequel le mélange de l'étape (I) contient, de plus, un solvant.

3. Un procédé selon les revendications 1 ou 2, dans lequel le mélange de l'étape (I) contient, de plus, un sel de métal des terres rares d'un acide gras.

4. Un procédé selon l'une quelconque des revendications 1 à 3, dans lequel la composition est encore préparée par élimination des substances volatiles du produit réactionnel de l'étape (I) avant l'étape (II).

5. Un procédé selon l'une quelconque des revendications 1 à 4, dans lequel le polydiorganosiloxane terminé par des groupes hydroxyle est un polydiorganosiloxane ayant la formule générale HOR¹₂SiO(R¹₂SiO)ₐSiR¹₂OH où chaque R¹ est choisi indépendamment parmi un radical hydrocarboné ou halogénohydrocarboné monovalent ayant 1 à 20 atomes de carbone ou un groupe alcényle et la valeur de "a" est telle que la viscosité dudit polydiorganosiloxane soit comprise entre 1000 et 500 000 mm²/s, telle que mesurée à 25°C.

6. Un procédé selon l'une quelconque des revendications 1 à 5, dans lequel (B) a un poids moléculaire moyen en nombre de 3500 à 6000.

7. Un procédé selon l'une quelconque des revendications 1 à 6, dans lequel le rapport moléculaire des motifs siloxanes R₃SiO_{1/2} aux motifs SiO_{4/2} est de 0,6 à 1,2.

8. Un procédé selon la revendication 7, dans lequel le rapport est de 0,6 à 1,0.

9. Un procédé selon l'une quelconque des revendications 1 à 8, dans lequel le composant (C) est présent en une quantité de 10 à 500 ppm par rapport au poids total des composants (A) et (B).

10. Un procédé selon 9, dans lequel la quantité est de 20 à 200 ppm par rapport au poids total des composants (A) et (B).
